# EUROPEAN PATENT APPLICATION

(11) **EP 4 365 630 A1**
(43) Date of publication of application: **08.05.2024**
(21) Application number: 21947566.2
(22) Date of filing: 30.06.2021
(51) Int. Cl.: G01S 13/10, G01S 7/285

(54) **SIGNAL PROCESSING METHOD AND APPARATUS, AND TERMINAL DEVICE**

(71) Applicant: Suteng Innovation Technology Co., Ltd, Shenzhen City Guangdong 518000 (CN)
(72) Inventor: GONG, Changsheng, Shenzhen, Guangdong 518000 (CN); DU, Yajun, Shenzhen, Guangdong 518000 (CN)
(74) Representative: Ran, Handong
(86) International application number: PCT/CN2021/103704
(87) International publication number: WO 2023/272612

(57) **Abstract**

Provided in the present application is a signal processing method, which is applied to a terminal device, and comprises: after receiving an indication signal sent by a laser receiving sensor, processing the indication signal, so as to obtain a target signal, wherein the delay of the target signal relative to the indication signal is a preset duration, the pulse width of the target signal is a target width value, and the target signal is used to trigger laser emission; and according to the target signal and the indication signal, determining a starting time for laser emission. By means of the method, the starting time for laser emission can be determined more accurately, so as to improve the laser measurement accuracy.

## Description

### TECHNICAL FIELD

This application pertains to the field of signal processing technologies, and particularly relates to a signal processing method and apparatus, a terminal device, and a computer-readable storage medium.

### BACKGROUND

The laser ranging technology has a wide range of applications in practical scenarios.

### SUMMARY

### Technical Problem

In actual application, laser transmission duration can be determined by determining a start moment of laser emission and a moment when a laser receiving sensor receives a laser beam, thereby performing laser ranging. However, currently, there is large uncertain delay jitter in the determined start moment of laser emission, which greatly affects corresponding laser measurement accuracy.

### Technical Solution

Embodiments of this application provide a signal processing method and apparatus, a terminal device, and a computer-readable storage medium, so that a start moment of laser emission can be determined more accurately and corresponding laser detection accuracy can be improved.

According to a first aspect, an embodiment of this application provides a signal processing method, applicable to a terminal device, where the signal processing method includes:
after an indication signal sent by a laser receiving sensor is received, processing the indication signal to obtain a target signal, where delay of the target signal relative to the indication signal is preset duration, a pulse width of the target signal is a target width, and the target signal is configured to trigger laser emission; and
determining a start moment of the laser emission based on the target signal and the indication signal.

According to a second aspect, an embodiment of this application provides a signal processing apparatus, applicable to a terminal device, where the signal processing apparatus includes:
a processing module, configured to: after an indication signal sent by a laser receiving sensor is received, process the indication signal to obtain a target signal, where delay of the target signal relative to the indication signal is preset duration, a pulse width of the target signal is a target width, and the target signal is configured to trigger laser emission; and
a determining module, configured to determine a start moment of the laser emission based on the target signal and the indication signal.

According to a third aspect, an embodiment of this application provides a terminal device, including a memory, a processor and a computer program stored in the memory and executable on the processor which, when executed by the processor causes the processor to carry out the signal processing method in the first aspect.

According to a fourth aspect, an embodiment of this application provides a computer-readable storage medium having stored thereon a computer program which, when executed by a processor, causes the processor to carry out the signal processing method in the first aspect.

According to a fifth aspect, an embodiment of this application provides a computer program product, where when the computer program product runs on a terminal device, the terminal device performs the signal processing method in the first aspect.

### Beneficial Effects

In the embodiments of this application, after receiving the indication signal sent by the laser receiving sensor, a terminal device processes the indication signal to obtain the target signal, where the delay of the target signal relative to the indication signal is the preset duration, the pulse width of the target signal is the target width, and the target signal is configured to trigger laser emission; and the terminal device determines the start moment of laser emission based on the target signal and the indication signal. It can be seen that after the indication signal is processed by the terminal device, the pulse width of the obtained target signal can be adjusted to the target width, which can meet a control requirement of a corresponding laser emission apparatus, thereby triggering laser emission. In addition, the delay of the target signal used to trigger laser emission relative to the indication signal is fixed delay. Therefore, a deviation of the indication signal relative to the start moment of laser emission can be considered as a fixed deviation. Based on the fixed deviation, a more accurate start moment of laser emission can be obtained, which avoids great uncertain delay jitter of the start moment of laser emission, thereby improving laser measurement accuracy.

### BRIEF DESCRIPTION OF THE DRAWINGS

To explain the technical solution in embodiments in this application, the following briefly introduces the accompanying drawings required to describe the embodiments or the prior art. Obviously, the accompanying drawings in the following description are only some embodiments in this application. A person of ordinary skill in the art may still derive other drawings from these accompanying drawings without creative efforts.
FIG. 1 is a schematic flowchart of a signal processing method according to an embodiment of this application;
FIG. 2 is a schematic diagram of signal transmission according to an embodiment of this application;
FIG. 3 is another schematic diagram of signal transmission according to an embodiment of this application;
FIG. 4 is still another schematic diagram of signal transmission according to an embodiment of this application;
FIG. 5 is yet another schematic diagram of signal transmission according to an embodiment of this application;
FIG. 6 is a schematic structural diagram of a signal processing apparatus according to an embodiment of this application; and
FIG. 7 is a schematic structural diagram of a terminal device according to an embodiment of this application.

### DESCRIPTION OF EMBODIMENTS

Laser ranging is widely applied to actual application scenarios.

Currently, a control device is usually used to control a laser emitter to emit a laser beam, and a synchronization signal is generated and sent to a laser receiving sensor simultaneously, so that the laser receiving sensor samples the synchronization signal, to determine a start moment of laser emission and start timing based on a rising edge of a sampled indication signal.

However, in the existing method, determining of the start moment of laser emission is easily affected due to working of phase-locked loops of the control device and the laser receiving sensor, and as a result, working clocks of the control device and the laser receiving sensor are in different phases. Therefore, there is a large uncertainty about the delay between the indication signal of the laser receiving sensor and the emission moment of emitting the laser beam by the laser emitter under control of the control device, and there is usually a large deviation, which causes large uncertain delay jitter to the start moment of laser emission, thereby affecting corresponding laser measurement accuracy.

To avoid the foregoing uncertain delay jitter, the laser emission is controlled by using the indication signal of the laser receiving sensor instead, which further causes the following problems:
1. Currently, the laser beam is usually emitted through a laser emission array, and if the laser emission array is controlled by using the indication signal of the laser receiving sensor, a control circuit of the laser emission array is more complex.
2. During actual application of various hardware, the control signal is usually required to be a narrow pulse signal, that is, a width of the signal is less than a preset width. However, with such width, the indication signal generated by the laser receiving sensor is not a narrow pulse, making it difficult to be applied to various subsequent control applications and unable to meet a requirement of a control system.

In embodiments of this application, the start moment of laser emission can be determined more accurately, and a target signal with an adjustable pulse width can be obtained to trigger laser emission.

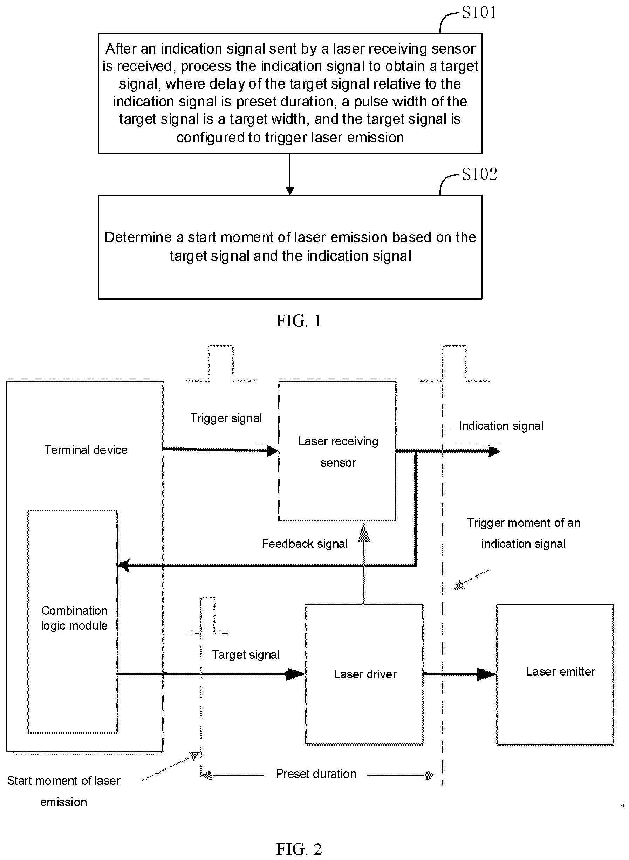

Specifically, FIG. 1 is a flowchart of a signal processing method according to an embodiment of this application. The signal processing method can be applied to the terminal device.

The terminal device can be a device different from a laser receiving sensor. Exemplarily, the terminal device can be a programmable device, a server, a desktop computer, a mobile phone, a tablet computer, a wearable device, a vehicle-mounted device, an augmented reality (AR) device/a virtual reality (VR) device, a laptop computer, an ultra-mobile personal computer (UMPC), a netbook, a personal digital assistant (PDA), or the like. This embodiment of this application imposes no limitation on a specific type of the terminal device.

The terminal device can be communicatively connected to the laser receiving sensor and the laser driver separately to transmit data. For example, the terminal device can send a trigger signal to the laser receiving sensor, so that the laser receiving sensor starts timing according to the trigger signal. In addition, the terminal device can also send a target signal to the laser driver, so that the laser driver drives the laser emission diode to implement laser emission.

In a specific example, the terminal device can be a programmable device.

The specific type of programmable device is not limited herein. Exemplarily, the programmable device may be Field-Programmable Gate Array (FPGA), Complex Programmable Logic Device (CPLD), Erasable Programmable Logic Device (EPLD), or the like. In actual application, a user can control the programmable device to perform specific functions through programming.

As shown in FIG. 1, the signal processing method can include the following steps:
Step S101: After an indication signal sent by a laser receiving sensor is received, process the indication signal to obtain a target signal, where delay of the target signal relative to the indication signal is preset duration, a pulse width of the target signal is a target width, and the target signal is configured to trigger laser emission.

In this embodiment of this application, the laser receiving sensor may be configured to detect a laser beam, and the laser beam may be emitted by the laser emitter and then reflected by an obstacle to be transmitted to the laser receiving sensor. In application scenarios such as distance measurement, a distance can be measured via the laser emitter and the laser receiving sensor.

The indication signal can be used to instruct the laser receiving sensor to start timing. The laser receiving sensor can be triggered to start timing based on the rising edge of the indication signal, or it is also possible that the indication signal is synchronously generated while the laser receiving sensor starts timing.

In some examples, the indication signal may be generated after the laser receiving sensor receives the trigger signal, and the trigger signal may be sent by the terminal device or another control device performing this embodiment of this application. However, in some other examples, the indication signal can be generated by the laser receiving sensor after an operation of a user on a specific button on the laser receiving sensor is detected.

In this embodiment of this application, there may be multiple specific processing methods in which the terminal device processes the indication signal to obtain the target signal. Exemplarily, the terminal device can delay the indication signal via a specified delay unit to obtain a delayed indication signal, and process a pulse width of the delayed indication signal to obtain the target signal. Certainly, it is also possible to process the pulse width of the indication signal first, and then delay the indication signal with a processed pulse width to obtain the target signal. At this time, the use of the specified delay unit to perform delay operation can usually guarantee good delay accuracy, so that delay between the obtained target signal and the indication signal is fixed delay.

The pulse signal whose pulse width is the target width can be preset or obtained based on the indication signal.

The preset duration can be determined by the user based on an actual scenario requirement. The preset duration can be equal to or greater than 0.
In an example, the terminal device may include a combination logic module; and
after an indication signal sent by a laser receiving sensor is received, processing the indication signal to obtain a target signal can include:
   after an indication signal sent by a laser receiving sensor is received, processing, by the combination logic module, the indication signal to obtain a target signal.

The combination logic module can include combination logic units such as a first delay unit and a first AND operation unit, to perform an operation of processing the indication signal to obtain the target signal.

For example, in some examples, the indication signal can be delayed by the first delay unit in the combination logic module to obtain the delayed indication signal, and then the first AND operation unit performs an AND operation on the delayed indication signal and the pulse signal whose pulse width is the target width, to obtain the target signal.

Because the processing of the indication signal by the combination logic module does not involve a sequence logic operation, no clock participates in the operation, and uncertainty delay jitter between an output and an input of the combination logic module that is caused different phases of the corresponding working clock does not occur.

As shown in FIG. 2, FIG. 2 is a schematic diagram of signal transmission in this example.

The terminal device sends a trigger signal to the laser receiving sensor to trigger the laser receiving sensor to generate an indication signal, a moment corresponding to a rising edge of the indication signal is a trigger moment of the indication signal, and the laser receiving sensor starts timing at the trigger moment.

The indication signal of the laser receiving sensor can be sent to the combination logic module of the terminal device, the indication signal is processed by the combination logic module to obtain the target signal, and the target signal can be used to control the laser driver, so that the laser driver drives the laser emitter to emit the laser beam. The trigger moment of the indication signal can be a moment when the laser receiving sensor starts timing, and therefore, the delay between the start moment of laser emission relative to the moment from which the laser receiving sensor starts timing is preset duration, to avoid a problem of large uncertain delay jitter of the moment when the laser receiving sensor starts timing and the emission moment at which the laser emitter emits the laser beam under control of the control device.

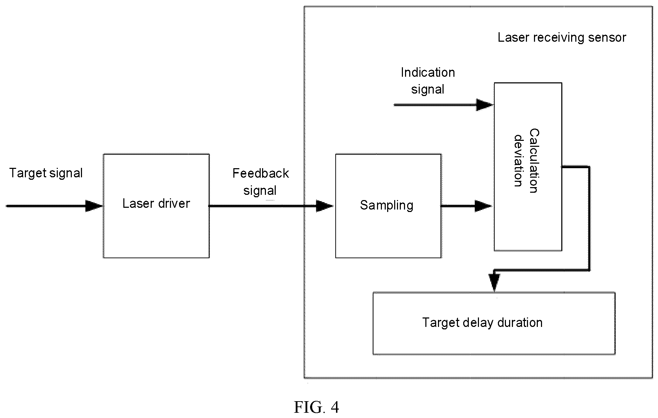

For a feedback signal in FIG. 2, refer to related embodiment parts in FIG. 4. Details are not described herein again.

In some embodiments, the indication signal is generated by sampling a trigger signal by the laser receiving sensor, and the trigger signal is sent by the terminal device to the laser receiving sensor.

The terminal device is a device for performing this embodiment of this application. In actual application, the terminal device can send a trigger signal to the laser receiving sensor, and after the working clock of the laser receiving sensor samples the trigger signal, the laser receiving sensor can generate the indication signal and start timing based on the rising edge of the indication signal.

At this moment, by using the trigger signal, the terminal device can control the laser receiving sensor to enter a measurement state and start timing, and can also process the indication signal to obtain the target signal for triggering laser emission. In addition, the delay of the target signal relative to the indication signal is preset duration, and a deviation of the indication signal relative to the start moment of laser emission can be considered as a fixed deviation. Based on the fixed deviation, a more accurate start moment of laser emission can be obtained. It can be seen that through the terminal device, the relevant operation of the laser receiving sensor and the operation of laser emission can be efficiently controlled, to clarify and simplify an information transmission process, thereby avoiding a redundant control process.

Step S102: Determine a start moment of the laser emission based on the target signal and the indication signal.

Specifically, the start moment of laser emission can be determined based on the delay of the target signal relative to the indication signal (that is, the preset duration) and the trigger moment corresponding to the indication signal.

The trigger moment corresponding to the indication signal is the moment from which the laser receiving sensor starts timing, and the laser receiving sensor starts timing based on the rising edge of the indication signal to enter the measurement state. After the delay of the target signal relative to the indication signal is determined as the preset duration, the trigger moment corresponding to the indication signal can be delayed by the preset duration, to obtain the start moment of laser emission.

Because the trigger moment corresponding to the indication signal is the moment from which the laser receiving sensor starts timing, the delay of the target signal relative to the indication signal is the preset duration, the target signal is used to trigger laser emission, and it can be seen that the deviation of the indication signal relative to the start moment of laser emission is determined based on the preset duration. Because the preset duration is a fixed delay value, a deviation of the indication signal relative to the start moment of laser emission can be considered as a fixed deviation. Based on the fixed deviation, a more accurate start moment of laser emission can be obtained.

In addition, the pulse width of the target signal is the target width, and therefore, an appropriate target width (set as, for example, a narrow pulse width) can be determined, so that the target signal can meet a control requirement of the corresponding laser emission apparatus, thereby triggering laser emission.

It can be seen that this embodiment of this application can be optimized in at least two aspects below:
1. The delay between the target signal used to control laser emission and the indication signal of the laser receiving sensor is set as fixed delay, so that the start moment of laser emission can be determined more accurately.
2. The pulse width of the target signal can be adjusted to the target width, and at this time, the reasonable target width (set as, for example, the narrow pulse width) can be determined, so that the target signal can meet the control requirement of the corresponding laser emission apparatus, which can trigger laser emission efficiently without needing conversion through another complex circuit.

In some embodiments, the terminal device includes a combination logic module, and the combination logic module includes a first delay unit, a negation unit and a first AND operation unit; and
after an indication signal sent by a laser receiving sensor is received, processing the indication signal to obtain a target signal includes:
after the indication signal sent by the laser receiving sensor is received, based on the indication signal, obtaining a first signal and a second signal through the first delay unit and the negation unit; and
performing, by the first AND operation unit, an AND operation on the first signal and the second signal to obtain the target signal.

In this embodiment, the first delay unit is configured to delay the corresponding input signal, and the negation unit is configured to perform negation on the corresponding input signal.

Specific arrangement positions of the first delay unit and the negation unit are not limited herein.

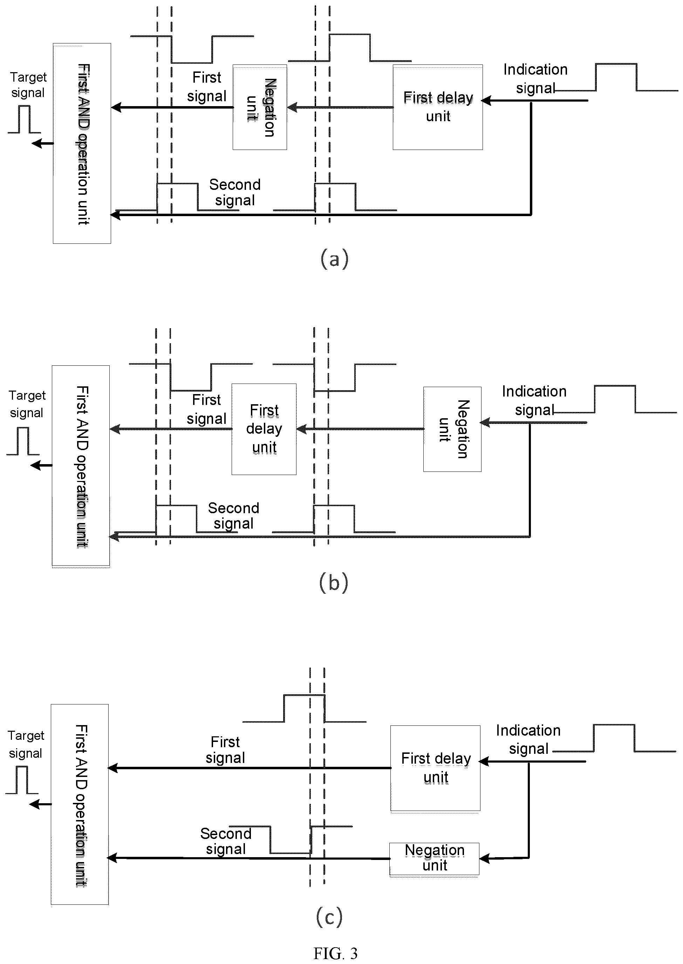

Specifically, as shown in FIG. 3, as for the specific arrangement positions of the first delay unit, the negation unit, and the first AND operation unit in the combination logic module, there are at least the following three cases:
1. As shown in part (a) in FIG. 3, in a specific example, the indication signal can be delayed through the first delay unit first, and then the delayed indication signal can be input into the negation unit to perform negation, to obtain the first signal, and the second signal can be the indication signal.

Arising edge of the target signal is determined based on a rising edge of the second signal, while a falling edge of the target signal is determined based on a falling edge of the first signal.

It can be seen that in this example, the pulse width of the obtained target signal is determined via duration delayed by the first delay unit, and the delay of the target signal relative to the indication signal can be considered to be 0.

2. As shown in part (b) in FIG. 3, in another specific example, the indication signal can be negated by the negation unit first, and then the negated signal is input into the first delay unit for delaying to obtain the first signal, and the second signal can be the indication signal.

In this example, the pulse width of the obtained target signal is determined via duration delayed by the first delay unit, and the delay of the target signal relative to the indication signal can be considered to be 0.

In the foregoing two examples, the negation unit is connected with the first delay unit in series, but serial connection sequences are different.

3. As shown in part (c) in FIG. 3, in still another specific example, the indication signal is delayed through the first delay unit to obtain the first signal. In addition, the indication signal is negated by the negation unit, to obtain a second signal.

In this example, the pulse width of the obtained target signal is determined via duration delayed by the first delay unit, and the delay of the target signal relative to the indication signal can be considered as a pulse width of the indication signal. Because this pulse width can be predetermined, the value of the pulse width of the indication signal can be obtained as the delay of the target signal relative to the indication signal, that is, the preset duration.

In this embodiment of this application, the first delay unit, the negation unit and the first AND operation element are all combination logic units, and therefore, no clock participates in operations of the corresponding delay, negation and AND operation, and uncertainty delay jitter between the obtained target signal and the indication signal that is caused due to the different phases of the corresponding working clock does not occur.

In addition, in this embodiment of this application, the pulse width (that is, the target width) of the target signal can be determined via the delay duration of the first delay unit. Because the delay duration of the first delay unit can be conveniently and flexibly adjusted, the pulse width of the target signal can also be flexibly adjusted accordingly, to satisfy requirements for the pulse width of the control signal in various application scenarios. For example, in some examples, a target signal with a narrow pulse width can be obtained by adjusting the delay duration of the first delay unit, to satisfy a requirement of relevant control hardware that the control signal is a narrow pulse. In some embodiments, the second signal is the indication signal.

In this embodiment, the delay between the second signal and the indication signal can be considered to be 0. At this time, the preset duration is 0, and therefore, it can be assumed that there is no delay between the target signal and the indication signal, and the moment from which the laser receiving sensor starts timing is the start moment of laser emission.

In some embodiments, the second signal is obtained by delaying the indication signal through the second delay unit.

In this embodiment, in consideration that the delay problem is caused due to operations such as charging and discharging of a capacitor in the processing unit in a process in which the processing unit processes the indication signal to obtain the first signal, the second signal can also be obtained by delaying the indication signal through the second delay unit. The second delay unit can be a combination logic unit. At this moment, when the indication signal is delayed through the second delay unit, no working clock is involved, and therefore, uncertain delay jitter caused due to the different phases of the corresponding working clock does not occur, thereby ensuring stability of the delay between the second signal and the indication signal.

In some embodiments, determining a start moment of laser emission based on the target signal and the indication signal includes:
obtaining a current temperature detected by a temperature sensor; and
determining the start moment of laser emission based on the current temperature, the indication signal and the target signal.

A specific arrangement position of the temperature sensor can be determined according to a condition such as an actual hardware layout. The temperature sensor may be arranged on the terminal device performing this embodiment of this application to detect the temperature of the terminal device, or the temperature sensor may be arranged in an external environment to detect temperature of the environment in which the terminal device is located.

During actual use, a temperature change may affect delay when a processing component such as a combination logic module processes the indication signal, thereby causing a small deviation to the desired related delay. Therefore, in this embodiment of this application, different methods can be used to determine the start moment of laser emission according to different temperature conditions, to eliminate deviation of temperature, thereby improving measurement accuracy.

If drift of delay of a component such as the combination logic module in the terminal device has small impact on the measurement accuracy at the current temperature, the start moment of laser emission can be determined based on the preset duration (namely, the delay duration of the target signal relative to the indication signal) and the trigger moment corresponding to the indication signal. However, if the drift of the delay of the combination logic device such as the processing unit is large at the current temperature, and the measurement accuracy is greatly affected, a feedback signal of the laser driver can be obtained, and a value of the delay between the feedback signal of the laser driver and the specified signal is detected to determine the start moment of laser emission.

In some embodiments, determining the start moment of laser emission based on the current temperature, the indication signal and the target signal includes:
if the current temperature is within a preset temperature range, determining the start moment of laser emission based on preset duration and the indication signal.

The start moment of laser emission can be determined according to the preset duration and the trigger moment corresponding to the indication signal. The trigger moment corresponding to the indication signal is the moment from which the laser receiving sensor starts timing, and the laser receiving sensor starts timing based on the rising edge of the indication signal.

The preset temperature range can be determined based on fixed-point temperature and a preset allowable temperature change range. The fixed-point temperature and the temperature change range can be determined based on an actual application scenario and an experiment. For example, in one example, the fixed-point temperature can be temperature at which the delay duration of the target signal relative to the indication signal is predetermined, and the temperature change range can be determined via the experiment, so that the drift of the delay of the component such as a combination logic module in the terminal device is less than the preset drift within the temperature change range.

If the current temperature is within the preset temperature range and the deviation of the delay of the component such as the combination logic module in the terminal device has small impact on the measurement accuracy, the start moment of laser emission can be determined based on the preset duration and the trigger moment corresponding to the indication signal. At this time, the delay duration of the target signal relative to the indication signal is fixed duration, and therefore, the delay duration of the target signal relative to the indication signal is not required every time the laser receiving sensor is used, which reduces consumption of related hardware and software resources and improves data processing efficiency.

In a specific example, it is also possible that if the current temperature is within a preset temperature range and duration during which the current temperature is within the preset temperature range is greater than the first duration threshold, the start moment of laser emission is determined based on preset duration and the indication signal.

At this time, if the duration during which the current temperature is within the preset temperature range is greater than the first duration threshold, it can be assumed that the current temperature can be stably within the preset temperature range rather than jitters at some moments. It can be seen that in this example, negative impact of conditions such as a temperature measurement error of the temperature sensor and jitter can be avoided, and the method of determining the start moment of laser emission can be prevented from being switched frequently, thereby ensuring stability of the system.

In some embodiments, determining the start moment of laser emission based on the current temperature, the indication signal and the target signal includes:
if the current temperature is out of a preset temperature range, obtaining target delay duration of a feedback signal relative to the indication signal, where the feedback signal is a signal generated by the laser driver based on the target signal; and
determining the start moment of laser emission based on the target delay duration and the indication signal.

In this embodiment of this application, if the current temperature is out of the preset temperature range, the deviation of the delay of the component such as the combination logic module in the terminal device has great impact on the measurement accuracy, and therefore, the start moment of laser emission cannot be directly determined based on the preset duration and the trigger moment corresponding to the indication signal. Instead, the corresponding feedback signal can be generated while the laser driver is triggered by the target signal.

At this time, the target delay duration includes not only the fixed delay of the target signal relative to the indication signal, but also a temperature-based deviation between the target signal and the indication signal, and a deviation when the laser driver generates the feedback signal based on the target signal. Therefore, the target delay duration can be regarded as the total delay corresponding to the moment from which the laser receiving sensor starts timing, and the start moment of laser emission can be obtained by delaying, by the target delay duration, the moment from which the laser receiving sensor starts timing.

In a specific example, it is also possible that if the current temperature is out of a preset temperature range and duration during which the current temperature is out of the preset temperature range is greater than a second duration threshold, target delay duration of a feedback signal relative to the indication signal is obtained, and the feedback signal is a signal generated by the laser driver based on the target signal.

At this time, if the duration during which the current temperature is out of the preset temperature range is greater than the second duration threshold, it can be assumed that the current temperature can be stably out of the preset temperature range within a period of time rather than jitters at some moments. It can be seen that in this example, negative impact of conditions such as a temperature measurement error of the temperature sensor and jitter can be avoided, and the method of determining the start moment of laser emission can be prevented from being switched frequently, thereby ensuring stability of the system.

The feedback signal can be a signal generated by the laser driver based on the target signal. The feedback signal may be sent to the laser receiving sensor, and the laser receiving sensor determines the target delay duration of the feedback signal relative to the indication signal, and then sends the target delay duration to the terminal device performing this embodiment of this application. Alternatively, the feedback signal can be sent to the terminal device, and the terminal device determines the target delay duration of the feedback signal relative to the indication signal.

In an example, the laser receiving sensor can start timing based on the rising edge of the indication signal, and performs sampling during timing, and after the feedback signal is detected by sampling, a deviation of the moment of sampling the feedback signal from the moment of starting the timing can be determined. The deviation is the target delay duration of the feedback signal relative to the indication signal.

At this time, the start moment of laser emission can be obtained by delaying the trigger moment corresponding to the indication signal by the target delay duration.

FIG. 4 is a schematic diagram of exemplary transmission of a signal according to an embodiment of this application.

After the target signal is transmitted to the laser driver, the laser driver can generate a feedback signal based on the target signal and transmit the feedback signal to the laser receiving sensor. After sampling the feedback signal, the laser receiving sensor can calculate a deviation between the sampling moment of the feedback signal and the moment from which a timer starts timing, to obtain the target delay duration of the feedback signal relative to the indication signal.

In some embodiments, determining a start moment of laser emission based on the target signal and the indication signal includes:
obtaining at least one target path signal, where each target path signal is a path signal of a laser emission unit in a laser emission array;
for each target path signal, performing, by the second AND operation unit, an AND operation on the target path signal and the target signal to obtain a third signal; and
determining the start moment of laser emission of the laser emission unit corresponding to at least one target path signal based on the third signal and the indication signal.

During actual application, a laser beam is usually sent through a laser emission array, to facilitate flexible adjustment of an intensity of the laser beam. The laser emission array can include multiple laser emission units arranged regularly, and each laser emission unit can be a device that can be used to emit a laser beam, for example, a laser emitting diode.

In this embodiment of this application, at least one target path signal may be obtained according to a need of an application scenario. The target path signal may be a path signal of the laser emission unit that needs to be triggered at present.

For each target path signal, the corresponding second AND operation unit performs an AND operation on the target path signal and the target signal, and a trigger signal can be obtained for each laser emission unit that needs to be triggered at present, so that the start moment of the laser emission of the laser emission unit corresponding to at least one target path signal is determined, thereby facilitating subsequent controlling of each laser emission unit that needs to be triggered at present to perform laser emission.

In some embodiments, obtaining at least one target path signal includes:
sending path signals of at least two laser emission units to a gating switch unit; and
performing, by a gating switch unit, gating on path signals of the multiple laser emission units to obtain the target path signal.

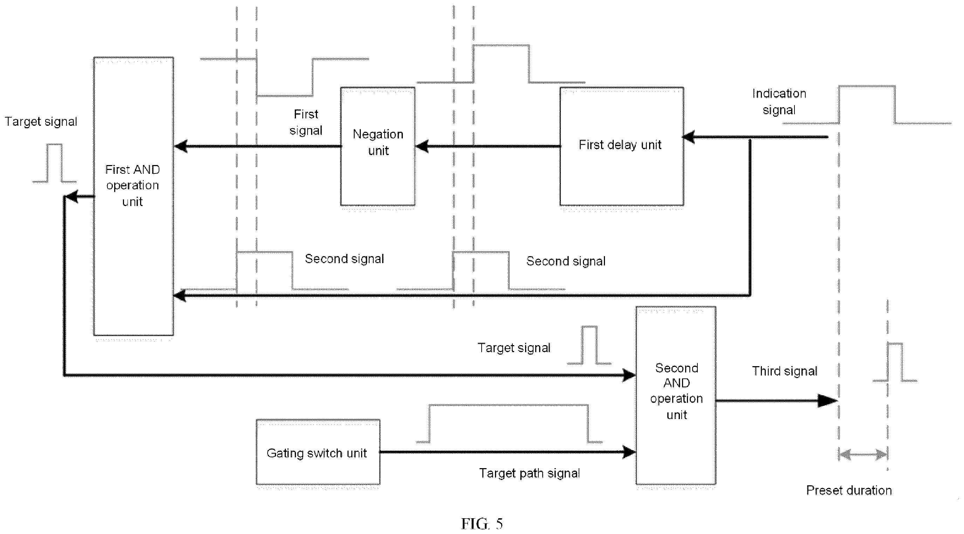

As shown in FIG. 5, FIG. 5 is a schematic diagram of transmission of a signal according to an embodiment of this application.

An AND operation can be performed on the first signal and the second signal via the first AND operation unit to obtain the target signal. The second AND operation unit can perform an AND operation on the target signal and the target path signal to obtain a third signal. The gating switch unit can perform gating on one of path signals of at least two laser emission units, and can also perform gating on the path signals of multiple laser emission units at the same time. By using the gating switch unit, the laser emission unit that currently needs to perform emission can be flexibly adjusted as needed.

It should be understood that a sequence number of each step in the foregoing embodiments does not mean an execution sequence. An execution sequence of each process should be determined based on a function and internal logic of each process, and should not constitute any limitation to an implementation process of the embodiments of this application.

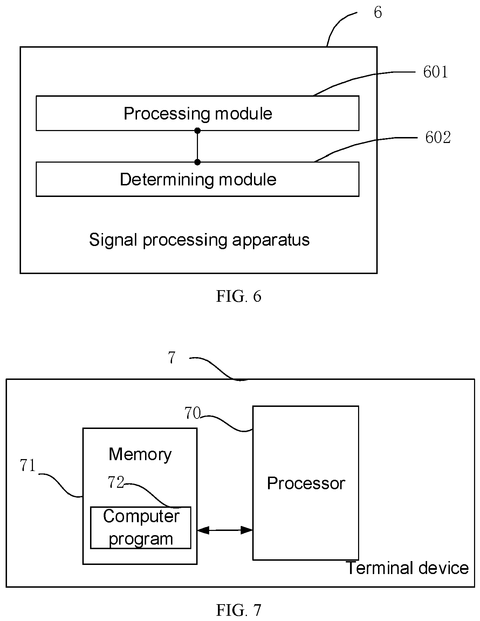

Corresponding to the foregoing signal processing method in the foregoing embodiment, FIG. 6 is a structural block diagram of a signal processing apparatus according to an embodiment of this application. The information processing apparatus can be applied to a terminal device. For ease of description, only those portions that relate to embodiments of the present application are shown.

Referring to FIG. 6, the signal processing apparatus 6 includes:
a processing module 601, configured to: after an indication signal sent by a laser receiving sensor is received, process the indication signal to obtain a target signal, where delay of the target signal relative to the indication signal is preset duration, a pulse width of the target signal is a target width, and the target signal is configured to trigger laser emission; and
a determining module 602, configured to determine a start moment of laser emission based on the target signal and the indication signal.

Optionally, the terminal device includes a combination logic module, and the combination logic module includes a first delay unit, a negation unit and a first AND operation unit; and
the processing module 601 includes:
a first processing unit, configured to: after the indication signal sent by the laser receiving sensor is received, based on the indication signal, obtain a first signal and a second signal through the first delay unit and the negation unit; and
a second processing unit, configured to perform an AND operation on the first signal and the second signal via the first AND operation unit to obtain the target signal.

Optionally, the second signal is the indication signal.

Optionally, the determining module 602 includes:
a first obtaining unit, configured to obtain a current temperature detected by a temperature sensor; and
a first determining unit, configured to determine the start moment of laser emission based on the current temperature, the indication signal and the target signal.

Optionally, the determining unit is configured to:
if the current temperature is within a preset temperature range, determine the start moment of laser emission based on preset duration and the indication signal.

Optionally, the determining unit includes:
an obtaining subunit, configured to: if the current temperature is out of a preset temperature range, obtain target delay duration of a feedback signal relative to the indication signal, where the feedback signal is a signal generated by the laser driver based on the target signal; and
a determining subunit, configured to determine the start moment of laser emission based on the target delay duration and the indication signal.

Optionally, the indication signal is generated by sampling a trigger signal by the laser receiving sensor, and the trigger signal is sent by the terminal device to the laser receiving sensor.

Optionally, the determining module 602 includes:
a second obtaining unit, configured to obtain at least one target path signal, where each target path signal is a path signal of a laser emission unit in a laser emission array;
a third processing unit, configured to: for each target path signal, perform an AND operation on the target path signal and the target signal via the second AND operation unit to obtain a third signal; and
a second determining unit, configured to determine the start moment of laser emission of the laser emission unit corresponding to at least one target path signal based on the third signal and the indication signal.

Optionally, the second obtaining unit includes:
a sending subunit, configured to send path signals of at least two laser emission units to a gating switch unit; and
a gating subunit, configured to perform gating on path signals of the multiple laser emission units via the gating switch unit to obtain the target path signal.

In the embodiments of this application, after receiving the indication signal sent by the laser receiving sensor, a terminal device processes the indication signal to obtain the target signal, where the delay of the target signal relative to the indication signal is the preset duration, the pulse width of the target signal is the target width, and the target signal is configured to trigger laser emission; and the terminal device determines the start moment of laser emission based on the target signal and the indication signal. It can be seen that after the indication signal is processed by the terminal device, the pulse width of the obtained target signal can be adjusted to the target width, which can meet a control requirement of a corresponding laser emission apparatus, thereby triggering laser emission. In addition, the delay of the target signal used to trigger laser emission relative to the indication signal is fixed delay. Therefore, a deviation of the indication signal relative to the start moment of laser emission can be considered as a fixed deviation. Based on the fixed deviation, a more accurate start moment of laser emission can be obtained, which avoids great uncertain delay jitter of the start moment of laser emission, thereby improving laser measurement accuracy.

It should be noted that content such as information exchange and an execution process between the foregoing apparatuses or units is based on the same concept as the method embodiments of this application. For specific functions and technical effects thereof, reference may be made to the method embodiments. Details are not described herein again.

FIG. 7 is a schematic structural diagram of a terminal device according to an embodiment of this application. As shown in FIG. 7, the terminal device 7 in this embodiment includes: at least one processor 70 (only one processor is shown in FIG. 7), a memory 71, and a computer program 72 stored in the memory 71 and capable of running on the at least one processor 70, where when the processor 70 executes the computer program 72, the steps in the foregoing signal processing method embodiments are implemented.

The foregoing terminal device 7 may be a computing device such as a programmable device, a server, a mobile phone, a wearable device, an augmented reality (AR) device/a virtual reality (VR) device, a desktop computer, a notebook computer, a desktop computer, and a palmtop computer. The terminal device may include, but is not limited to, the processor 70 and the memory 71. A person skilled in the art can understand that FIG. 7 is only an example of the terminal device 7, and does not constitute a limitation to the terminal device 7. The terminal device may include more or fewer components than those shown in the figure, or a combination of some components, or different components. For example, the terminal device may also include input and output devices, a network access device, and the like. The input device may include a keyboard, a touchpad, a fingerprint collection sensor (configured to collect fingerprint information and fingerprint orientation information of a user), a microphone, a camera, and the like. The output device may include a display, a loudspeaker, and the like.

The processor 70 may be a central processing unit (CPU), or may be another general-purpose processor, a digital signal processor (DSP), an application specific integrated circuit (ASIC), a field-programmable gate array (FPGA) or another programmable logic device, a discrete gate or transistor logic device, a discrete hardware component, or the like. The general-purpose processor can be a microprocessor, or the processor can be any conventional processor or the like.

The memory 71 in some embodiments may be an internal storage unit of the terminal device 7, such as a hard disk or a memory of the terminal device 7. The memory 71 may alternatively be an external storage device of the terminal device 7 in some other embodiments, for example, a plug-connected hard disk, a smart media card (SMC), a secure digital (SD) card, or a flash card (Flash Card) equipped on the terminal device 7. Further, the memory 71 may alternatively include both the internal storage unit and the external storage device of the terminal device 7. The memory 71 is configured to store an operating system, an application program, a boot loader (Boot Loader), data, another program, and the like, for example, program code of a computer program. The memory 71 can also be configured to temporarily store output data or to-be-output data.

In addition, although not shown, the foregoing terminal device 7 may also include a network connection module, such as a Bluetooth module, a Wi-Fi module, a cellular network module, and the like. Details are not described herein again.

In the embodiments of this application, when the processor 70 executes the computer program 72 to implement any one of the steps in the foregoing embodiments of the signal processing method, after receiving the indication signal sent by the laser receiving sensor, the terminal device processes the indication signal to obtain the target signal, where the delay of the target signal relative to the indication signal is the preset duration, the pulse width of the target signal is the target width, and the target signal is configured to trigger laser emission; and the terminal device determines the start moment of laser emission based on the target signal and the indication signal. It can be seen that after the indication signal is processed by the terminal device, the pulse width of the obtained target signal can be adjusted to the target width, which can meet a control requirement of a corresponding laser emission apparatus, thereby triggering laser emission. In addition, the delay of the target signal used to trigger laser emission relative to the indication signal is fixed delay. Therefore, a deviation of the indication signal relative to the start moment of laser emission can be considered as a fixed deviation. Based on the fixed deviation, a more accurate start moment of laser emission can be obtained, which avoids great uncertain delay jitter of the start moment of laser emission, thereby improving laser measurement accuracy.

An embodiment of this application further provides a computer-readable storage medium, where the computer-readable storage medium stores a computer program, and when the computer program is executed by a processor, the steps in the foregoing method embodiments can be implemented.

An embodiment of this application provides a computer program product, where when the computer program product runs on a terminal device, the terminal device can implement the steps in the foregoing method embodiments.

When the integrated unit is implemented in the form of a software functional unit and sold or used as an independent product, the integrated unit may be stored in a computer-readable storage medium. Based on such understanding, some or all of the processes for implementing the methods in the embodiments of this application may be completed by related hardware instructed by a computer program. The computer program may be stored in a computer-readable storage medium. When the computer program is executed by the processor, the steps of the foregoing method embodiments are implemented. The computer program includes computer program code, and the computer program code may be in a form of source code, object code, or an executable file, some intermediate forms, or the like. The computer-readable medium may at least include: any entity or apparatus capable of loading the computer program code onto a photographing apparatus/terminal device, a recording medium, a computer memory, a read-only memory (ROM), a random access memory (RAM), an electrical carrier signal, a telecommunications signal, and a software distribution medium. The computer-readable medium is, for example, a USB flash drive, a removable hard disk, a magnetic disk, or an optical disc. In some jurisdictions, according to legislation and patent practice, the computer-readable medium cannot be a radio wave signal or a telecommunication signal.

In the foregoing embodiments, the descriptions of the embodiments have respective focuses. For a part that is not described in detail in one embodiment, reference may be made to related descriptions in other embodiments.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the embodiments provided in this application, it should be understood that the disclosed apparatus or network device and method may be implemented in other manners. For example, the embodiments of the described apparatus or network device are merely examples. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A signal processing method, applicable to a terminal device, comprising:
after an indication signal sent by a laser receiving sensor is received, processing the indication signal to obtain a target signal, wherein delay of the target signal relative to the indication signal is preset duration, a pulse width of the target signal is a target width, and the target signal is configured to trigger laser emission; and
determining a start moment of the laser emission based on the target signal and the indication signal.

2. The signal processing method according to claim 1, wherein the terminal device comprises a combination logic module, and the combination logic module comprises a first delay unit, a negation unit and a first AND operation unit, and
said after an indication signal sent by a laser receiving sensor is received, processing the indication signal to obtain a target signal comprises:
after the indication signal sent by the laser receiving sensor is received, based on the indication signal, obtaining a first signal and a second signal through the first delay unit and the negation unit; and
performing, by the first AND operation unit, an AND operation on the first signal and the second signal to obtain the target signal.

3. The signal processing method according to claim 2, wherein the second signal is the indication signal.

4. The signal processing method according to claim 1, wherein said determining a start moment of the laser emission based on the target signal and the indication signal comprises:
obtaining a current temperature detected by a temperature sensor; and
determining the start moment of the laser emission based on the current temperature, the indication signal and the target signal.

5. The signal processing method according to claim 4, wherein said determining the start moment of the laser emission based on the current temperature, the indication signal and the target signal comprises:
if the current temperature is within a preset temperature range, determining the start moment of the laser emission based on the preset duration and the indication signal.

6. The signal processing method according to claim 4, wherein said determining the start moment of the laser emission based on the current temperature, the indication signal and the target signal comprises:
if the current temperature is out of a preset temperature range, obtaining target delay duration of a feedback signal relative to the indication signal, wherein the feedback signal is a signal generated by a laser driver based on the target signal; and
determining the start moment of the laser emission based on the target delay duration and the indication signal.

7. The method according to claim 1, wherein the indication signal is generated by sampling a trigger signal by the laser receiving sensor, and the trigger signal is sent by the terminal device to the laser receiving sensor.

8. The signal processing method according to any one of claims 1 to 7, wherein said determining a start moment of the laser emission based on the target signal and the indication signal comprises:
obtaining at least one target path signal, wherein each target path signal is a path signal of a laser emission unit in a laser emission array;
for each target path signal, performing, by a second AND operation unit, an AND operation on the target path signal and the target signal to obtain a third signal; and
determining the start moment of laser emission of the laser emission unit corresponding to the at least one target path signal based on the third signal and the indication signal.

9. The signal processing method according to claim 8, wherein said obtaining at least one target path signal comprises:
sending path signals of at least two laser emission units to a gating switch unit; and
performing, by the gating switch unit, gating on the path signals of the multiple laser emission units to obtain the target path signal.

10. A signal processing apparatus, applicable to a terminal device, comprising:
a processing module, configured to: after an indication signal sent by a laser receiving sensor is received, process the indication signal to obtain a target signal, wherein delay of the target signal relative to the indication signal is preset duration, a pulse width of the target signal is a target width, and the target signal is configured to trigger laser emission; and
a determining module, configured to determine a start moment of the laser emission based on the target signal and the indication signal.

11. A terminal device, comprising a memory, a processor, and a computer program stored in the memory and executable on the processor which, when executed by the processor, causes the processor to carry out steps comprising:
after an indication signal sent by a laser receiving sensor is received, processing the indication signal to obtain a target signal, wherein delay of the target signal relative to the indication signal is preset duration, a pulse width of the target signal is a target width, and the target signal is configured to trigger laser emission; and
determining a start moment of the laser emission based on the target signal and the indication signal.

12. The terminal device according to claim 11, wherein the terminal device comprises a combination logic module, and the combination logic module comprises a first delay unit, a negation unit and a first AND operation unit, and
said after an indication signal sent by a laser receiving sensor is received, processing the indication signal to obtain a target signal comprises:
after the indication signal sent by the laser receiving sensor is received, based on the indication signal, obtaining a first signal and a second signal through the first delay unit and the negation unit; and
performing, by the first AND operation unit, an AND operation on the first signal and the second signal to obtain the target signal.

13. The terminal device according to claim 12, wherein the second signal is the indication signal.

14. The terminal device according to claim 11, wherein when the processor executes the computer program, said determining a start moment of the laser emission based on the target signal and the indication signal comprises:
obtaining a current temperature detected by a temperature sensor; and
determining the start moment of the laser emission based on the current temperature, the indication signal and the target signal.

15. The terminal device according to claim 14, wherein when the processor executes the computer program, said determining the start moment of the laser emission based on the current temperature, the indication signal and the target signal comprises:
if the current temperature is within a preset temperature range, determining the start moment of the laser emission based on the preset duration and the indication signal.

16. The terminal device according to claim 14, wherein when the processor executes the computer program, said determining the start moment of the laser emission based on the current temperature, the indication signal and the target signal comprises:
if the current temperature is out of a preset temperature range, obtaining target delay duration of a feedback signal relative to the indication signal, wherein the feedback signal is a signal generated by a laser driver based on the target signal; and
determining the start moment of the laser emission based on the target delay duration and the indication signal.

17. The terminal device according to claim 11, wherein the indication signal is generated by sampling a trigger signal by the laser receiving sensor, and the trigger signal is sent by the terminal device to the laser receiving sensor.

18. The terminal device according to any one of claims 11 to 17, wherein when the processor executes the computer program, said determining a start moment of the laser emission based on the target signal and the indication signal comprises:
obtaining at least one target path signal, wherein each target path signal is a path signal of a laser emission unit in a laser emission array;
for each target path signal, performing, by a second AND operation unit, an AND operation on the target path signal and the target signal to obtain a third signal; and
determining the start moment of laser emission of the laser emission unit corresponding to the at least one target path signal based on the third signal and the indication signal.

19. The terminal device according to claim 18, wherein when the processor executes the computer program, said obtaining at least one target path signal comprises:
sending path signals of at least two laser emission units to a gating switch unit; and
performing, by the gating switch unit, gating on the path signals of the multiple laser emission units to obtain the target path signal.

20. A computer-readable storage medium, having stored thereon a computer program which, when executed by a processor, causes the processor to carry out the method according to any one of claims 1 to 9.
